Europäisches Patentamt

European Patent Office

Office européen des brevets

(11) Publication number: **0 032 606**
A1

## EUROPEAN PATENT APPLICATION

(21) Application number: **80300184.1**

(22) Date of filing: **21.01.80**

(51) Int. Cl.³: **F 16 D 13/71,** F 16 D 13/58, F 16 D 13/50

(43) Date of publication of application: **29.07.81** Bulletin 81/30

(84) Designated Contracting States: **AT BE CH DE FR GB IT LU NL SE**

(71) Applicant: **Laycock Engineering Limited, Archer Road, Millhouses Sheffield S8 0JY (GB)**

(72) Inventor: **Kettell, John, 5, Marston Close, Bronfield Woodhouse Sheffield S18 5RX (GB)**

(74) Representative: **Robertson, Bernard Collett et al, Guest, Keen & Nettlefolds Limited Group Patents & Licensing Department Group Head Office P.O. Box 55, Smethwick Warley West Midlands, B66 2RZ (GB)**

(54) **Friction clutches.**

(57) A clutch comprises a recessed cover 10, a pressure plate 13 drive straps 20 connecting the pressure plate to the cover for torque transmission whilst permitting relative axial movement of the pressure plate and spring means 14 between the cover and pressure plate to bias the pressure plate into engagement with a driven plate. Enlarged rivet heads 23 are provided on the rivets connecting the pressure plate to the straps to prevent movement of the pressure plate in a direction out of the cover when the clutch is dropped prior to assembly to a flywheel. The enlarged rivets take the load of pressure plate on impact with a flat surface.

0032606

77.077/ABC          Friction Clutches

This invention relates to a clutch assembly comprising a recessed cover member, a pressure plate, resilient flexible means connecting the cover member and the pressure plate together for torque transmission whilst permitting relative axial movement therebetween (such axis being the axis of rotation of the clutch assembly when in use) and spring means operative between the cover member and pressure plate to bias the pressure plate towards a position corresponding, when the assembly is in use, to the engaged position.  Such a clutch assembly will hereinafter be referred to as a clutch assembly of the kind specified.

One form of clutch assembly of the kind specified commonly used has a cover member which is provided with a peripheral flange adapted to be bolted to the flywheel of an internal combustion engine with which the clutch assembly is to be used.  The pressure plate is accommodated within the recess of the cover, the spring means biasing the pressure plate outwardly thereof to engage a driven plate received between it and the flywheel.  When the cover member of the assembly is secured to the flywheel, the range of permitted free movement of the pressure plate within the cover is limited because of its engagement with the driven plate, but this constraint is not present when the assembly of the cover and pressure plate is not connected to the flywheel.  Whilst movement of the pressure plate into the cover member is restrained by the spring means, movement of the pressure plate outwardly of the cover member is not constrained other than by the flexible means connecting it to the cover member.

This lack of constraint on movement of the pressure plate and the cover member can lead to problems during handling of the clutch assembly.  In particular, if the assembly is placed or dropped onto a surface, with the flange of the cover member downward, the flange will normally contact the surface first. The pressure plate will then have to move down within the cover member before it contacts the surface itself, which can give rise to overstressing of the flexible means connecting it to the cover member. The pressure plate typically is a relatively heavy component, which can aggravate the problem since it will then possess appreciable inertia if, for example, the clutch assembly should be dropped or roughly handled. The flexible means will, when the clutch assembly is not in use, already be in a relatively highly stressed condition because of the displacement of the pressure plate outwardly of the cover under the influence of the spring means.

This over stressing of the flexible means, which in a typical example is made up of three drive straps in the form of single leaf springs, can cause the flexible means to be deflected beyond the elastic limit so that they take on a permanent set. Then, in the installed clutch, there is a possibility that on clutch release the flexible means will hold the pressure plate in engagement with the clutch driven plate and so cause clutch drag.

It has already been proposed in U.S. patent 4,122,939 to overcome this problem by providing an extension to the drive strap beyond its engagement with the pressure plate and to provide a lug on the cover to act as a stop to engage with the extended drive strap. A difficulty which can arise with this proposed solution to the problem is that the bending load applied to the extension of the drive strap when the clutch is dropped can still result in distortion of the normally operative part of the drive strap or distortion of the attachment between the drive strap and the pressure plate. Such distortions can in themselves lead to clutch drag.

An object of the present invention is to overcome the problem of distortion of the drive strap as can occur when the clutch is dropped.

The present invention provides a clutch assembly comprising a recessed cover member, a pressure plate, flexible resilient means connecting the pressure plate to the cover member for torque transmission whilst permitting relative axial movement therebetween, spring means operative between the cover member and pressure plate to bias the pressure plate towards a position corresponding, when the assembly is in use, to the engaged position and means for preventing movement of the pressure plate in a direction out of the recess to an extent which would over stress the flexible means, characterised in that the latter means is constituted by abutment means projecting axially from the pressure plate in a direction away from the cover such that when the clutch is placed on a plane surface with the recess directed towards the surface, the abutment means engage the surface to provide the required restriction on movement of the pressure plate.

As such an abutment means must of necessity be placed inward from the rim of the cover, the abutment would not engage the plane surface immediately if the clutch were to be dropped at an angle. However it has been found surprisingly, that such abutments are effective in practice to prevent over stressing of the drive straps. Possibly this is because impacts at an angle do not bring the cover to an immediate stop and so produce only a limited tendency to distort the drive straps. Similarly, if one clutch is dropped onto a stack of clutches for transportation purposes, rather than onto a plane surface, it may be that the lack of rigidity of the possibly irregular stack of clutch also tends to prevent a sufficiently sudden impact to distort the drive straps.

Conveniently, the abutment means is constituted by extended portions of the fastening means securing the flexible torque transmitting means to the pressure plate. When the flexible means comprises a plurality of straps, and the fastening means therefor comprises rivets, such rivets may be provided with enlarged heads to constitute the abutment means.

The invention will now be described by way of example with reference to the accompanying drawings in which:

Figure 1 is a section through part of one embodiment of clutch assembly according to the invention;

Figure 1a is a plan of part of the assembly of Figure 1, and;

Figure 2 is a section through a further embodiment of clutch assembly according to the invention.

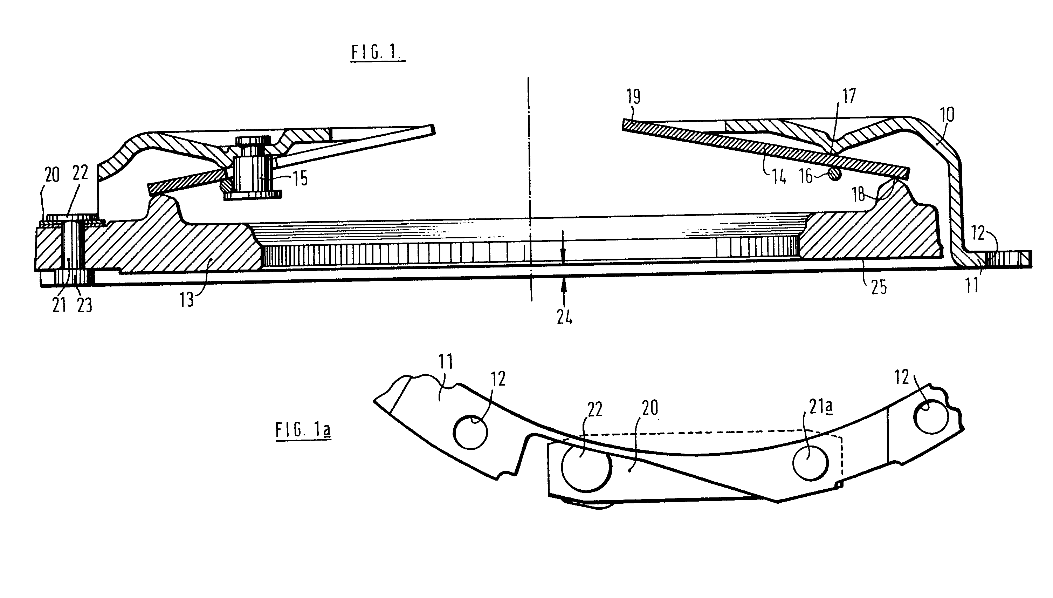

Referring firstly to Figure 1, there is illustrated a clutch assembly comprising a cover member 10 of recessed annular form, provided with a peripheral flange 11 formed with a plurality of apertures 12 for receiving bolts to secure the cover member to a flywheel, not shown, of an internal combustion engine. Accommodated within the cover member for axial movement relative thereto is an annular pressure plate 13, there being provided a diaphragm spring 14 operative between the cover member and pressure plate for biasing the latter towards the flywheel, i.e., outwardly of the cover member. The diaphragm spring 14 is secured to the cover member by rivets 15 and a wire ring 16, presses against an annular ridge 17 on the cover member and an annular ridge 18 on the pressure plate, and is provided with radially inwardly extending fingers 19 for engagement by a release mechanism, not shown.

The pressure plate 13 is secured to the cover member for torque transmission while permitting relative axial movement by a plurality of resilient flexible metal straps 20, only one of which is depicted in the drawings at its point of attachment to the pressure plate. Such straps extend generally tangentially of the clutch assembly as seen in Figure 1a, each strap being secured to the cover member at its one end and to the pressure plate at its opposite end. The illustrated strap 20 is secured to the pressure plate by a rivet having a shank 21, and heads 22, 23 and to the cover member by a rivet 21a.

The clutch assembly illustrated is depicted in its free condition, i.e., with the spring 14 relaxed. When the assembly is in use, the spring will be nearly planar, but it will be noted that in the illustrated condition there is an axial distance 24 between the plane of the surface 25 of the pressure plate which engages the driven plate when the assembly is in use, and the plane of the surface of the flange 11 on the cover member. In the absence of any means to prevent it, dropping the clutch assembly on a surface with the pressure plate downward would cause the pressure plate to travel through a distance equal to the clearance 24 before it contacted the surface. This travel would lead to overstressing of the straps 20 securing the pressure plate to the cover such that they would take on a permanent set. This could lead to clutch drag when the clutch is in use because the distorted drive straps could hold the pressure plate in contact with the driven plate.

In order to prevent this occurring, the heads 23 of the rivets securing the straps to the pressure plate are enlarged in an axial direction away from the cover so that they terminate in or close to the plane of the flange 11. Thus, the enlarged rivet heads 23 contact a surface on which the assembly is placed at the same time as or soon after the flange 11, thereby preventing such potentially damaging excess movement of the pressure plate.

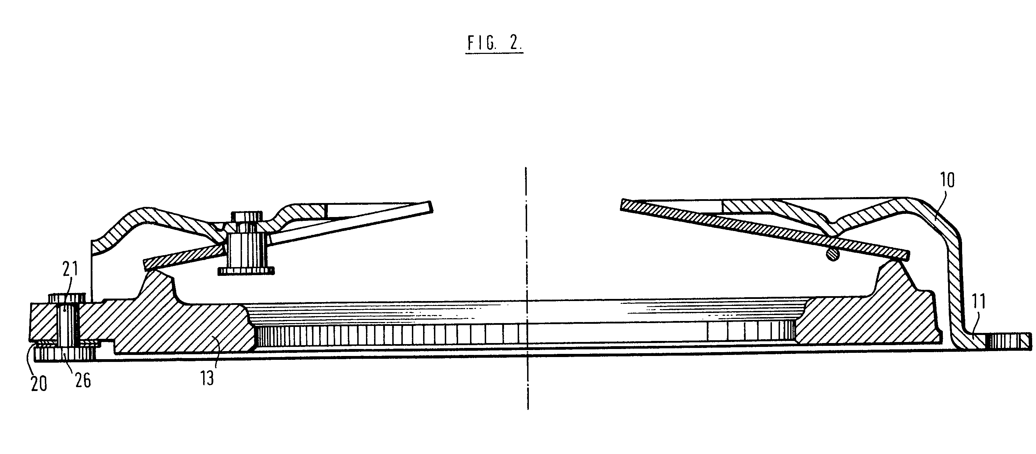

The clutch assembly shown in Figure 2 corresponds to that of Figure 1 with the exception that the straps 20 are secured, by rivets 21, at the opposite side of the pressure plate 13. In this case, the lowermost heads 26 of rivets 21 are enlarged to constitute abutment means preventing over-travel of the pressure plate, as above described.

Rivets used for securing straps to the pressure plate are supplied with one manufactured head, the other head on the rivet being formed during the riveting process. It is usual for the manufactured heads of the rivets to be disposed on the side of the pressure plate on which the straps are disposed, and thus in the embodiment of Figure 2 the rivets will be supplied with manufactured heads of appropriate thickness. In the embodiment of Figure 1, the heads of the rivets formed during the riveting process would be formed to a suitable thickness by varying the initial length of the rivets used, or by controlling the conditions of the actual riveting process.

0032606

CLAIMS

1. A clutch assembly comprising a recessed cover member, a pressure plate, flexible resilient means connecting the pressure plate to the cover member for torque transmission whilst permitting relative axial movement therebetween, spring means operative between the cover member and pressure plate to bias the pressure plate towards a position corresponding, when the assembly is in use, to the engaged position and means for preventing movement of the pressure plate in a direction out of the recess to an extent which would over stress the flexible means, characterised in that the latter means is constituted by abutment means (23, 26) projecting axially from the pressure plate (13) in a direction away from the cover (10) such that when the clutch is placed on a plane surface with the recess directed towards the surface, the abutment means engage the surface to provide the required restriction on movement of the pressure plate.

2. An assembly according to claim 1 characterised in that the abutment means is constituted by extended portions (23) of fastening means (21) which also secures the flexible torque transmitting means (20) to the pressure plate.

3. An assembly according to claim 2 characterised in that said flexible means comprises a plurality of generally tangentially extending straps (20), the fastening means therefor comprises rivets (21), and such rivets are provided with enlarged heads (23) constituting the abutment means.

FIG. 1.

FIG. 1a

0032606

FIG. 2.

European Patent Office

EUROPEAN SEARCH REPORT

0032606

Application number

EP 80 30 0184

## DOCUMENTS CONSIDERED TO BE RELEVANT

| Category | Citation of document with indication, where appropriate, of relevant passages | Relevant to claim |
|---|---|---|
| A | FR - A - 867 268 (BORG-WARNER) | |
| A | FR - A - 1 502 107 (FERODO) | |
| A | FR - A - 2 047 609 (FICHTEL) | |
| A | FR - A - 2 342 427 (LUK) | |
| A | FR - A - 2 428 177 (FERODO) | |
| A | US - A - 3 520 388 (SINK) | |
| A | DE - A - 2 658 744 (LUK) | |
| A | DE - A - 2 827 888 (LUK) | |

----

**CLASSIFICATION OF THE APPLICATION (Int. Cl. 3)**

F 16 D 13/71
       13/58
       13/50

**TECHNICAL FIELDS SEARCHED (Int.Cl. 3)**

F 16 D

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 19-09-1980 | ORTHLIEB |

EPO Form 1503.1 06.78